(19) Europäisches Patentamt
European Patent Office
Office européen des brevets

(11) **EP 3 929 023 B1**

(12) **EUROPEAN PATENT SPECIFICATION**

(45) Date of publication and mention
of the grant of the patent:
**11.10.2023 Bulletin 2023/41**

(21) Application number: **21179538.0**

(22) Date of filing: **15.06.2021**

(51) International Patent Classification (IPC):
**B60L 3/10** *(2006.01)*     **B60T 8/175** *(2006.01)*
**B60K 28/16** *(2006.01)*     **B60W 30/18** *(2012.01)*

(52) Cooperative Patent Classification (CPC):
**B60L 3/106; B60K 28/16; B60T 8/1706;
B60T 8/175; B60W 30/18172;** B60L 2200/12;
B60W 2050/0026; B60W 2300/36; B60W 2520/10;
B60W 2520/263; B60W 2520/28; B60W 2540/10;
B60W 2710/083; B60W 2720/10; B60W 2720/28;

(Cont.)

(54) **TRACTION CONTROL SYSTEM OF ELECTRIC MOTORCYCLE**

TRAKTIONSSTEUERUNGSSYSTEM FÜR EIN ELEKTRISCHES MOTORRAD

SYSTÈME DE CONTRÔLE DE TRACTION DE MOTOCYCLETTE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2020 TW 109121237**

(43) Date of publication of application:
**29.12.2021 Bulletin 2021/52**

(73) Proprietor: **Taiwan ABS Test Center Co., Ltd.
New Taipei City 238 (TW)**

(72) Inventor: **CHEN, Fu-Chieh
New Taipei City 238 (TW)**

(74) Representative: **Brown, Michael Stanley
Alpha & Omega,
Chine Croft
East Hill
Ottery St. Mary, Devon EX11 1PJ (GB)**

(56) References cited:
**EP-A1- 2 944 526     US-A1- 2013 261 925
US-B2- 9 409 573**

(52) Cooperative Patent Classification (CPC): (Cont.)
B60Y 2200/12

**Description**

**FIELD OF THE INVENTION**

The present invention relates to a control method of a traction control system of an electric motorcycle to enhance a safety of the electric motorcycle.

**BACKGROUND OF THE INVENTION**

To enhance riding safety of an electric motorcycle, an antilock brake system (ABS) is provided on the electric motorcycle to avoid a lockup and a skidding of a tire. However, ABS cannot avoid a sudden skidding of the tire when the electric motorcycle starts, accelerate a running speed, a turn-making because of an excessive difference of a rotating speed of a front wheel and a rear wheel. Therefore, it is safer to fix ABS and a traction control system (TCS) on the electric motorcycle.

The present invention has arisen to mitigate and/or obviate the afore-described disadvantages.

US2013261925 discloses a traction control device for a motorcycle eliminates a need for a waiting time for detecting an amount of change in a vehicle state and a subsequent prediction time, and can execute quick traction control. The traction control device includes an engine driving force control unit, for calculating a real slip ratio of the motorcycle, setting a target slip ratio according to a driving state of the motorcycle, and controlling a driving force of an engine so that the real slip ratio becomes the target slip ratio. The traction control device also includes a throttle grip opening degree sensor for detecting an opening degree of a throttle grip; and a bank angle sensor for detecting a bank angle of the motorcycle. The engine driving force control unit calculates the target slip ratio on a basis of the throttle opening degree and the bank angle of the motorcycle.

**SUMMARY OF THE INVENTION**

The primary objective of the present invention is to provide a control method of a traction control system of an electric motorcycle so as to enhance a safety of the electric motorcycle, reduce the rotating speed of the rear wheel and the running speed of the electric motorcycle and avoid a wheel skidding of the front wheel and/or the rear wheel.

To obtain the above-mentioned objective, a control method of a traction control system of an electric motorcycle is applied to drive the electric motorcycle and contains: sending a control signal of a throttle grip to a controller, outputting electric currents to a motor from the controller so that the motor generates a rotating magnetic field to drive a rear wheel of the electric motorcycle to revolve.

The electric motorcycle includes a dashboard to display a power of at least one rechargeable accumulator, and a running speed of the electric motorcycle.

A traction control system (TCS) is connected with a signal wire which is connected with the throttle grip and the controller of the electric motorcycle, and the traction control system contains a TCS calculation unit, and the TCS calculation unit executes steps of:

A) reading a rotating speed of a front wheel and a rotating speed of a rear wheel and calculating a difference W of the rotating speed of the front wheel and the rotating speed of the rear wheel;

B) determining the difference W, wherein when the rotating speed of the rear wheel is more than the rotating speed of the front wheel, the difference W is defined as a posite value; when the rotating speed of the rear wheel is less than the rotating speed of the front wheel, the difference W is defined as a negative value;

C) when the running speed of the electric motorcycle is less than 7Km/h, the TCS calculation unit outputs the opening signal of the throttle grip to the controller, and the running speed of the electric motorcycle is controlled by the throttle grip; when the difference W is the negative value, the TCS calculation unit outputs the opening signal of the throttle grip to the controller, and the running speed of the electric motorcycle is controlled by the throttle grip; when the difference W is a positive value, the TCS calculation unit reads the running speed A of the electric motorcycle and calculates a first formula which is a ratio B of the difference W, wherein the TCS calculation unit applies a table looking-up method to build a three-dimension (3D) database based on an instant running speed A of the electric motorcycle and the ratio B instantly and to figure out a reduced ratio C corresponding to an output of the power so as to execute a second formula, thus acquiring a downgrade signal of the throttle grip, and the downgrade signal of the throttle grip is outputted to the controller so that the controller outputs a rated current to reduce a rotating speed of the motor based on the downgrade signal of the throttle grip, thus reducing the rotating speed of the rear wheel and the running speed of the electric motorcycle.

The first formula is the ratio B of the difference W, which is

$$\text{ratio B} = [\text{ (the rotating speed of the rear wheel} - \text{the rotating speed}$$

$$\text{of the front wheel) / the rotating speed of the front wheel ] } \times 100\%.$$

The second formula is $N \times (1-C)$, and N is the opening signal of the throttle grip.

**BRIEF DESCRIPTION OF THE DRAWINGS**

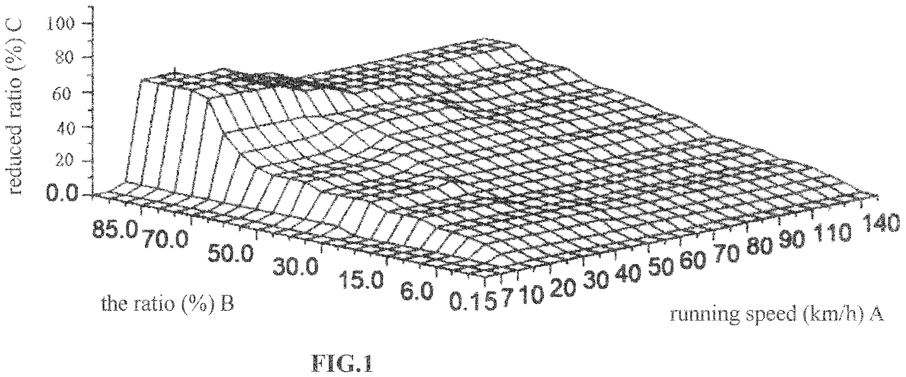

FIG. 1 is a diagram showing a 3D database of a traction control system (TCS) according to the present invention.

**DETAILED DESCRIPTION OF THE PREFERRED EMBODIMENTS**

A method of driving an electric motorcycle contains: sending a control signal of a throttle grip to a controller, outputting electric currents to a motor from the controller so that the motor generates a rotating magnetic field to drive a rear wheel of the electric motorcycle to revolve. Then, the throttle grip is rotated to change the electric currents of the controller so that a rotating speed of the motor controls a running speed of the electric motorcycle, and a user observes a dashboard of the electric motorcycle, thus learning a power of at least one rechargeable accumulator, the running speed and a status of the electric motorcycle.

A traction control system (TCS) according to the present invention is connected with a signal wire which is connected with the throttle grip and the controller of the electric motorcycle, and the traction control system comprises a TCS calculation unit, wherein the TCS calculation unit executes a control method which contains steps of:

A) reading a rotating speed of a front wheel and a rotating speed of a rear wheel and calculating a difference W of the rotating speed of the front wheel and the rotating speed of the rear wheel, wherein the control method further contains a step of reading the running speed of the electric motorcycle displayed by a display disc of an anti-lock braking system (ABS) of the electric motorcycle or obtained by a sensor of the electric motorcycle;

B) determining the difference W, wherein when the rotating speed of the rear wheel is more than the rotating speed of the front wheel, the difference W is defined as a positive value; when the rotating speed of the rear wheel is less than the rotating speed of the front wheel, the difference W is defined as a negative value;

C) outputting an opening signal of the throttle grip to the controller by using the TCS calculation unit when the rotating speed of the rear wheel is less than 7Km/h, wherein the rotating speeds of the front wheel and the rear wheel are controlled by the throttle grip; when the difference W is the negative value, the TCS calculation unit outputs the opening signal of the throttle grip to the controller, and the rotating speeds of the front wheel and the rear wheel are controlled by the throttle grip (instead of the TCS); when the difference W is the positive value, the TCS calculation unit reads the running speed A km/h of the electric motorcycle and calculates a ratio B of the difference W (represented by percentage), wherein the ratio B = [ (the rotating speed of the rear wheel - the rotating speed of the front wheel) / the rotating speed of the front wheel ] $\times$ 100%.

The TCS calculation unit applies a table looking-up method to build a three-dimension (3D) database (as shown in FIG. 1) based on an instant running speed A of the electric motorcycle and the ratio B instantly and to figure out a reduced ratio C corresponding to an output of the power, such that the opening signal N of the throttle grip times (1-C), i.e., $N \times (1-C)$ to acquire a downgrade signal of the throttle grip, and the downgrade signal of the throttle grip is outputted to the controller so that the controller outputs a rated current to reduce a rotating speed of the motor based on the downgrade signal of the throttle grip, thus reducing the rotating speed of the rear wheel and the running speed of the electric motorcycle and avoiding a wheel skidding of the front wheel and/or the rear wheel.

The reduced ratio C of the present invention is changeable according to a weight, a distribution of the weight, and the output of the power of the electric motorcycle, so different types and specifications of electric motorcycle have different 3D database.

**Claims**

1. A control method of a traction control system of an electric motorcycle being applied to drive the electric motorcycle and comprising: sending a control signal of a throttle grip to a controller, outputting electric currents to a motor from the controller so that the motor generates a rotating magnetic field to drive a rear wheel of the electric motorcycle to revolve;

the electric motorcycle including a dashboard to display a power of at least one rechargeable accumulator, and a running speed of the electric motorcycle;

**characterized in that** a traction control system (TCS) is connected with a signal wire which is connected with the throttle grip and the controller of the electric motorcycle, and the traction control system comprises a TCS calculation unit, wherein the TCS calculation unit executes steps of:

A) reading a rotating speed of a front wheel and a rotating speed of a rear wheel and calculating a difference (W) of the rotating speed of the front wheel and the rotating speed of the rear wheel;

B) determining the difference (W), wherein when the rotating speed of the rear wheel is more than the rotating speed of the front wheel, the difference (W) is defined as an positive value; when the rotating speed of the rear wheel is less than the rotating speed of the front wheel, the difference (W) is defined as a negative value;

C) when the running speed of the electric motorcycle is less than 7Km/h, the TCS calculation unit outputs the opening signal of the throttle grip to the controller, and the running speed of the electric motorcycle is controlled by the throttle grip; when the difference (W) is the negative value, the TCS calculation unit outputs the opening signal of the throttle grip to the controller, and the running speed of the electric motorcycle is controlled by the throttle grip; when the difference (W) is a positive value, the TCS calculation unit reads the running speed (A) of the electric motorcycle and calculates a first formula (1) which is a ratio (B) of the difference (W), wherein the TCS calculation unit applies a table looking-up method to build a three-dimension (3D) database based on an instant running speed (A) of the electric motorcycle and the ratio (B) instantly and to figure out a reduced ratio (C) corresponding to an output of the power so as to execute a second formula (2), thus acquiring a downgrade signal of the throttle grip, and the downgrade signal of the throttle grip is outputted to the controller so that the controller outputs a rated current to reduce a rotating speed of the motor based on the downgrade signal of the throttle grip, thus reducing the rotating speed of the rear wheel and the running speed of the electric motorcycle;

wherein the first formula (1) is the ratio (B) of the difference (W), the ratio B = [ (the rotating speed of the rear wheel – the rotating speed of the front wheel) / the rotating speed of the front wheel ] × 100%;

wherein the second formula (2) is N × (1-C), and N is the opening signal of the throttle grip.
wherein the second formula (2) is N × (1-C), and N is the opening signal of the throttle grip.

**Patentansprüche**

1. Steuerverfahren eines Traktionssteuersystems eines Elektromotorrads, das angewendet wird, um das Elektromotorrad anzutreiben, und Folgendes umfasst: Senden eines Steuersignals eines Gasgriffs an eine Steuerung, Ausgeben elektrischer Ströme an einen Motor von der Steuerung, so dass der Motor ein drehendes Magnetfeld erzeugt, um ein Hinterrad des Elektromotorrads drehend anzutreiben;

wobei das Elektromotorrad ein Armaturenbrett umfasst, um eine Leistung mindestens eines wiederaufladbaren Akkumulators und eine Fahrgeschwindigkeit des Elektromotorrads anzuzeigen;

**dadurch gekennzeichnet**, das s ein Traktionssteuersystem (TCS) mit einer Signalleitung verbunden ist, die mit dem Gasgriff und der Steuerung des Elektromotorrads verbunden ist, und das Traktionssteuersystem eine TCS-Berechnungseinheit umfasst, wobei die TCS-Berechnungseinheit folgende Schritte ausführt:

A) Auslesen einer Drehgeschwindigkeit eines Vorderrads und einer Drehgeschwindigkeit eines Hinterrads und Berechnen einer Differenz (W) der Drehgeschwindigkeit des Vorderrads und der Drehgeschwindigkeit des Hinterrads;

B) Bestimmen der Differenz (W), wobei, wenn die Drehgeschwindigkeit des Hinterrads höher als die Drehgeschwindigkeit des Vorderrads ist, die Differenz (W) als ein positiver Wert definiert wird; wobei, wenn die

**EP 3 929 023 B1**

Drehgeschwindigkeit des Hinterrads kleiner als die Drehgeschwindigkeit des Vorderrads ist, die Differenz (W) als ein negativer Wert definiert wird;

C) wenn die Fahrgeschwindigkeit des Elektromotorrads kleiner als 7 km/h ist, gibt die TCS-Berechnungseinheit das Öffnungssignal des Gasgriffs an die Steuerung aus und die Fahrgeschwindigkeit des Elektromotorrads wird durch den Gasgriff gesteuert;

wobei, wenn die Differenz (W) der negative Wert ist, die TCS-Berechnungseinheit das Öffnungssignal des Gasgriffs an die Steuerung ausgibt und die Fahrgeschwindigkeit des Elektromotorrads durch den Gasgriff gesteuert wird;

wobei, wenn die Differenz (W) ein positiver Wert ist, die TCS-Berechnungseinheit die Fahrgeschwindigkeit (A) des Elektromotorrads ausliest und eine erste Formel (1) berechnet, die ein Verhältnis (B) der Differenz (W) ist, wobei die TCS-Berechnungseinheit ein Tabellennachschlageverfahren anwendet, um eine dreidimensionale (3D) Datenbank basierend auf einer augenblicklichen Fahrgeschwindigkeit (A) des Elektromotorrads und dem Verhältnis (B) augenblicklich aufzubauen und ein reduziertes Verhältnis (C) zu ermitteln, das einer Ausgabe der Leistung entspricht, um eine zweite Formel (2) auszuführen, wodurch ein Herabsetzungssignal des Gasgriffs erhalten wird, und

wobei das Herabsetzungssignal des Gasgriffs an die Steuerung ausgegeben wird, so dass die Steuerung einen Nennstrom ausgibt, um eine Drehgeschwindigkeit des Motors basierend auf dem Herabsetzungssignal des Gasgriffs zu reduzieren, wodurch die Drehgeschwindigkeit des Hinterrads und die Fahrgeschwindigkeit des Elektromotorrads reduziert werden;

```
    wobei die erste Formel (1) das Verhältnis (B) der
Differenz  (W)  ist,  wobei  das  Verhältnis  B  =
[(Drehgeschwindigkeit         des         Hinterrads        -
Drehgeschwindigkeit  des  Vorderrads)/Drehgeschwindigkeit
des Vorderrads] × 100 %;
```

wobei die zweite Formel (2) N × (1-C) ist und N das Öffnungssignal des Gasgriffs ist.
wobei die zweite Formel (2) N × (1-C) ist und N das Öffnungssignal des Gasgriffs ist.

**Revendications**

1. Procédé de contrôle d'un système de contrôle de traction d'une motocyclette électrique étant appliqué pour entraîner la motocyclette électrique et comprenant : l'envoi d'un signal de contrôle d'une poignée des gaz à un dispositif de contrôle, la sortie de courants électriques vers un moteur à partir du dispositif de contrôle de sorte que le moteur génère un champ magnétique rotatif pour entraîner une roue arrière de la motocyclette électrique à tourner ;

la motocyclette électrique incluant un tableau de bord pour afficher une puissance d'au moins un accumulateur rechargeable, et une vitesse de course de la motocyclette électrique ;
**caractérisé en ce qu'**un système de contrôle de traction (TCS) est connecté à un fil de signal qui est connecté à la poignée des gaz et au dispositif de contrôle de la motocyclette électrique, et le système de contrôle de traction comprend une unité de calcul de TCS, l'unité de calcul de TCS exécutant des étapes consistant à :

A) relever une vitesse de rotation d'une roue avant et une vitesse de rotation d'une roue arrière et calculer une différence (W) de la vitesse de rotation de la roue avant et de la vitesse de rotation de la roue arrière ;
B) déterminer la différence (W), où lorsque la vitesse de rotation de la roue arrière est supérieure à la vitesse de rotation de la roue avant, la différence (W) est définie comme une valeur positive ; lorsque la vitesse de rotation de la roue arrière est inférieure à la vitesse de rotation de la roue avant, la différence (W) est définie comme une valeur négative ;
C) lorsque la vitesse de course de la motocyclette électrique est inférieure à 7 km/h, 1'unité de calcul de TCS sort le signal d'ouverture de la poignée des gaz vers le dispositif de contrôle, et la vitesse de course de la motocyclette électrique est contrôlée par la poignée des gaz ; lorsque la différence (W) est la valeur négative, l'unité de calcul de TCS sort le signal d'ouverture de la poignée des gaz vers le dispositif de contrôle, et la vitesse de course de la motocyclette électrique est contrôlée par la poignée des gaz ; lorsque

6

la différence (W) est une valeur positive, l'unité de calcul de TCS relève la vitesse de course (A) de la motocyclette électrique et calcule une première formule (1) qui est un rapport (B) de la différence (W), l'unité de calcul de TCS appliquant un procédé de consultation de table pour construire une base de données tridimensionnelle (3D) sur la base d'une vitesse de course instantanée (A) de la motocyclette électrique et du rapport (B) instantanément et pour trouver un rapport réduit (C) correspondant à une sortie de la puissance de façon à exécuter une deuxième formule (2), acquérant ainsi un signal de déclivité de la poignée des gaz, et le signal de déclivité de la poignée des gaz est sorti vers le dispositif de contrôle de sorte que le dispositif de contrôle sorte un courant nominal pour réduire une vitesse de rotation du moteur sur la base du signal de déclivité de la poignée des gaz, réduisant ainsi la vitesse de rotation de la roue arrière et la vitesse de course de la motocyclette électrique ;

```
la première formule (1) étant le rapport (B) de la
différence (W), le rapport B = [ (la vitesse de
rotation de la roue arrière - la vitesse de rotation de
la roue avant) / la vitesse de rotation de la roue
avant ] x 100 % ;
```

la deuxième formule (2) étant N × (1-C), et N étant le signal d'ouverture de la poignée des gaz.
la deuxième formule (2) étant N × (1-C), et N étant le signal d'ouverture de la poignée des gaz.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013261925 A